# EUROPEAN PATENT SPECIFICATION

(11) **EP 4 307 597 B1**
(45) Date of publication and mention of the grant of the patent: **18.11.2026**
(21) Application number: 23198347.9
(22) Date of filing: 14.03.2023
(51) Int. Cl.: H04L 5/00

(54) **ENHANCED UL DMRS CONFIGURATIONS**
VERBESSERTE UL-DMRS-KONFIGURATIONEN
CONFIGURATIONS DE DMRS UL AMÉLIORÉES

(30) Priority: 16.03.2022 US 202263320677 P; 08.03.2023 US 202318118957
(43) Date of publication of application: 17.01.2024
(62) Document number(s) of the earlier application(s) in accordance with Art. 76 EPC: 23161840.6 / 4 246 854
(73) Proprietor: Apple Inc., Cupertino, CA 95014 (US)
(72) Inventor: ZHANG, Yushu, Cupertino, California, 95014 (US); YANG, Weidong, Cupertino, California, 95014 (US); NIU, Huaning, Cupertino, California, 95014 (US); FAKOORIAN, Seyed Ali Akbar, Cupertino, California, 95014 (US); OTERI, Oghenekome, Cupertino, California, 95014 (US); ZENG, Wei, Cupertino, California, 95014 (US); HE, Hong, Cupertino, California, 95014 (US)
(74) Representative: Carpmaels & Ransford LLP

(56) References cited:
- US-A1- 2018 278 395
- US-A1- 2020 204 335

## Description

### TECHNICAL FIELD

This disclosure relates to methods and systems for enhanced uplink (UL) demodulation reference signal (DMRS) configurations.

### BACKGROUND

Wireless communication networks provide integrated communication platforms and telecommunication services to wireless user devices. Example telecommunication services include telephony, data (e.g., voice, audio, and/or video data), messaging, internet-access, and/or other services. The wireless communication networks have wireless access nodes that exchange wireless signals with the wireless user devices using wireless network protocols, such as protocols described in various telecommunication standards promulgated by the Third Generation Partnership Project (3GPP). Example wireless communication networks include time division multiple access (TDMA) networks, frequency-division multiple access (FDMA) networks, orthogonal frequency-division multiple access (OFDMA) networks, Long Term Evolution (LTE), and Fifth Generation New Radio (5G NR). The wireless communication networks facilitate mobile broadband service using technologies such as OFDM, multiple input multiple output (MIMO), advanced channel coding, massive MIMO, beamforming, and/or other features.

Demodulation Reference Signals (DMRS) are used in wireless communication networks to determine the quality of downlink and uplink channels. For example, DMRS can be transmitted in the uplink (UL) with a Physical Uplink Shared Channel (PUSCH). The DMRS and the PUSCH undergo the same transmission conditions (e.g., the DMRS and the PUSCH are transmitted using the same precoding and antenna ports). A base station receiving the PUSCH and the DMRS knows the sequence transmitted by the DMRS. The base station uses this information and the received DMRS to determine UL transmission conditions.

Another signal used in wireless communication networks is a Phase Tracking Reference Signal (PTRS). Like DMRS, this signal can be used in both uplink (e.g., PUSCH) and downlink communications. The primary function of this signal is to track the phase of the local oscillator at the transmitter and the receiver. As such, the signal can be used to compensate phase noise impact and frequency offset impact in uplink or downlink communications.
US2018278395 discloses methods, apparatuses, and systems relate to a reference signal generation and mapping, including determining antenna ports, frequency indices, generating a DM-RS with cover codes, and transmitting via resource elements mapping.
US2020204335 discloses a method and device for decoding in a wireless communication system using first and second DMRS signals from a base station based on particular patterns, antenna ports, and time axial symbols.

### SUMMARY

The invention is defined by the independent claims. A selection of optional features of the invention is set out in the dependent claims.

Insofar as the term embodiment is used in the following, or features are presented as being optional, this should be interpreted in such a way that the only protection sought is that of the invention claimed (with due regard to Article 69 EPC and the protocol thereto).

References to "embodiment(s)" throughout the description which are not under the scope of the appended claims merely represent possible exemplary executions and are not part of the present invention.

In some implementations, the FD-based mapping pattern includes a length-2 FD-orthogonal cover code (FD-OCC2) and four control division multiplexing (CDM) groups.

In some implementations, where communicating, using the FD-based mapping pattern, a communication including a resource block that includes the UL DMRS mapped to the single OFDM symbol includes: generating the DMRS for resource elements in the OFDM symbol using: ${a}_{k , l}^{p , u} = {w}_{f} \left(k′\right) {w}_{l} \left(l′\right) r \left(2n+k′\right)$, where k represents a subcarrier index, l represents a symbol index, p represents an antenna port index, u represents a subcarrier spacing scaling factor, wₗ represents a time division (TD) sequence, w_{f} represents a FD sequence, and r represents a base DMRS sequence.

In some implementations, where k = 4n + k' + delta, where delta is selected from a set {0, 2, 4, 6}, and where k' is selected from a set {0, 1}.

In some implementations, the communication includes a plurality of resource blocks that include DMRS, and a number of the plurality of resource blocks is even.

In some implementations, determining a frequency division (FD) based mapping pattern for mapping uplink (UL) demodulation reference signals (DMRS) involves receiving signaling indicating whether to use a network-specific mapping pattern or a UE-specific mapping pattern.

In some implementations, the signaling is one of higher layer signaling or downlink control information (DCI).

In some implementations, the higher layer signaling is one of Radio Resource Control (RRC) signaling or a Medium Access Control (MAC) Control Element (CE).

In some implementations, the method further involves determining, based on the signaling, to use the network-specific mapping; and in response, determining the FD-based mapping pattern based on one of: (i) a reference point for a current active bandwidth part and an allocated resource block index, or (ii) a common reference point and the allocated resource block index.

In accordance with another aspect of the present disclosure, a method involves: determining a time division multiplexing (TDM) based mapping pattern for mapping uplink (UL) demodulation reference signals (DMRS) to DMRS symbols, where the DMRS are categorized into a plurality of control division multiplexing (CDM) groups, and where the mapping pattern uses TDM to multiplex the plurality of CDM groups in the DMRS symbols; generating, using the TDM-based mapping pattern, a communication including a resource block that includes the UL DMRS mapped to the DMRS symbols; and transmitting the communication to a serving base station.

Other versions include corresponding systems, apparatus that include one or more processors, and computer programs to perform the actions of methods defined by instructions encoded on computer readable storage devices. These and other versions may optionally include one or more of the following features.

In some implementations, where communicating, using the TDM-based mapping pattern, a communication including a resource block that includes the UL DMRS mapped to the DMRS symbols involves: mapping each of the plurality of CDM groups to a respective DMRS symbol.

In some implementations, the plurality of CDM groups include four CDM groups, and the DMRS symbols include two DMRS symbols.

In some implementations, two of the four CDM groups are mapped to each DMRS symbol.

In some implementations, the plurality of CDM groups include six CDM groups, and the DMRS symbols include two DMRS symbols.

In some implementations, three of the six CDM groups are mapped to each DMRS symbol.

The details of one or more embodiments of these systems and methods are set forth in the accompanying drawings and the description below. Other features, objects, and advantages of these systems and methods will be apparent from the description and drawings, and from the claims.

### BRIEF DESCRIPTION OF THE FIGURES

FIG. 1A and FIG. 1B illustrate example patterns of two existing types of DMRS configurations.
FIG. 2 illustrates an example wireless network, in accordance with some embodiments.
FIG. 3 illustrates an example pattern of a first enhanced DMRS configuration, in accordance with some embodiments.
FIG. 4 illustrates an example pattern of a second enhanced DMRS configuration, in accordance with some embodiments.
FIG. 5 illustrates an example network-side resource mapping pattern, in accordance with some embodiments.
FIG. 6A and FIG. 6B illustrate example patterns of a fourth enhanced DMRS configuration, in accordance with some embodiments.
FIG. 7A and FIG. 7B illustrate example patterns of a fifth enhanced DMRS configuration, in accordance with some embodiments.
FIG. 8A illustrates a flowchart of an example method, in accordance with some embodiments.
FIG. 8B illustrates a flowchart of another example method, in accordance with some embodiments.
FIG. 9 illustrates a user equipment (UE), in accordance with some embodiments.
FIG. 10 illustrates an access node, in accordance with some embodiments.

### DETAILED DESCRIPTION

Existing wireless communication systems support two types of uplink (UL) demodulation reference signals (DMRS): Type 1 DMRS and Type 2 DMRS. Type 1 DMRS supports up to eight antenna ports. Further, Type 1 DMRS uses length-2 frequency domain orthogonal cover codes (FD-OCC2), length-2 time domain OCC (TD-OCC2), and two code division multiplexing (CDM) groups. Type 2 DMRS supports up to twelve antenna ports, and uses FD-OCC2, TD-OCC2, and three CDM groups. These existing systems are described in Release 15 of the standards promulgated by the Third Generation Partnership Project (3GPP). These standards include 3GPP Technical Specifications (TSs).

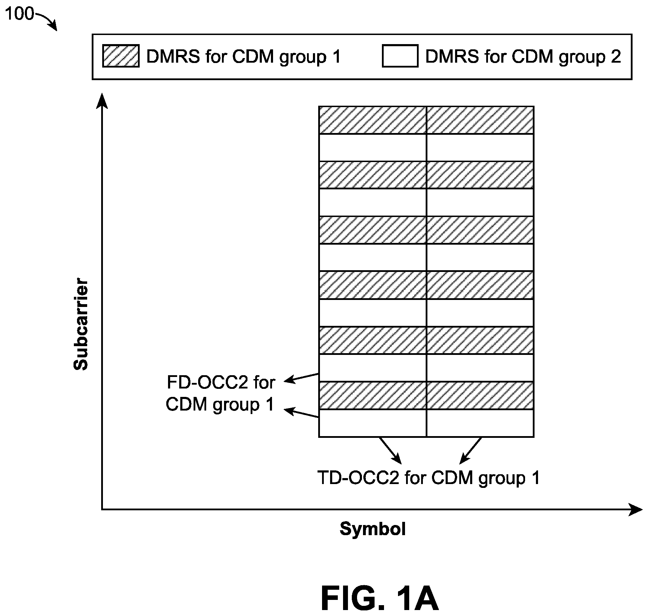

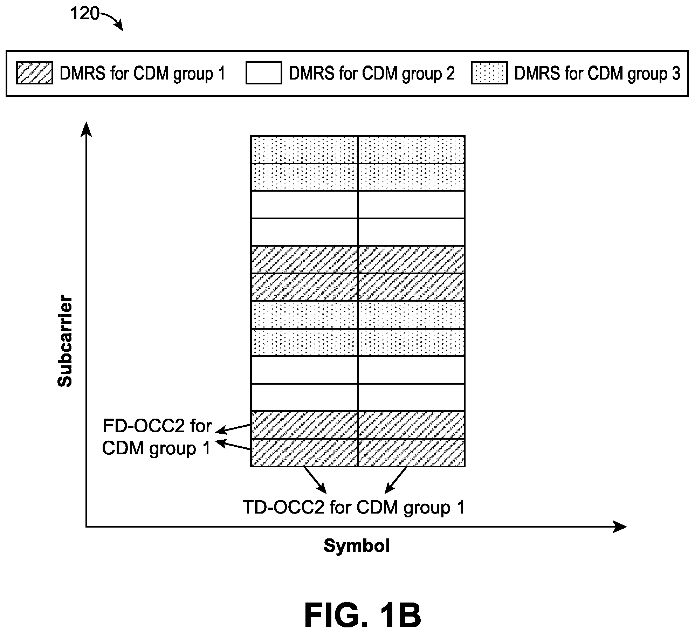

FIG. 1A and FIG. 1B illustrate example patterns of the two existing types of DMRS configurations, in accordance with some embodiments. Specifically, FIG. 1A illustrates an example pattern 100 of a Type 1 DMRS mapped to resource elements. As shown in FIG. 1A, Type 1 DMRS supports up to eight antenna ports, and uses FD-OCC2, TD-OCC2, and two CDM groups to map the DMRS to the resource elements. FIG. 1B illustrates an example pattern 120 of a Type 2 DMRS mapped to resource elements. As shown in FIG. 1B, Type 2 DMRS supports up to twelve antenna ports, and uses FD-OCC2, TD-OCC2, and three CDM groups to map the DMRS to the resource elements. And as shown in FIG. 1A and FIG. 1B, the patterns 100, 120 are spread across two DMRS symbols in a resource block.

However, existing wireless communication systems do not permit the use of TD-OCC (e.g., TD-OCC2) when a Phase Tracking Reference signal (PTRS) is enabled. The use of TD-OCC is not permitted in this scenario because when PTRS is enabled it is assumed that a time-domain phase noise is too large and that using TD-OCC may further degrade the performance. As a result, when PTRS is enabled, only up to four antenna ports is supported for Type 1 DMRS and only up to six antenna ports is supported for Type 2 DMRS (since TD-OCC cannot be used). Although this configuration prevents performance degradation from TD-OCC, it limits the number of antenna ports that can be supported by the DMRS.

This disclosure describes methods and systems for implementing enhanced UL DMRS configurations. Among other benefits, the enhanced UL DMRS configurations can support at least eight antenna ports when PTRS is enabled.

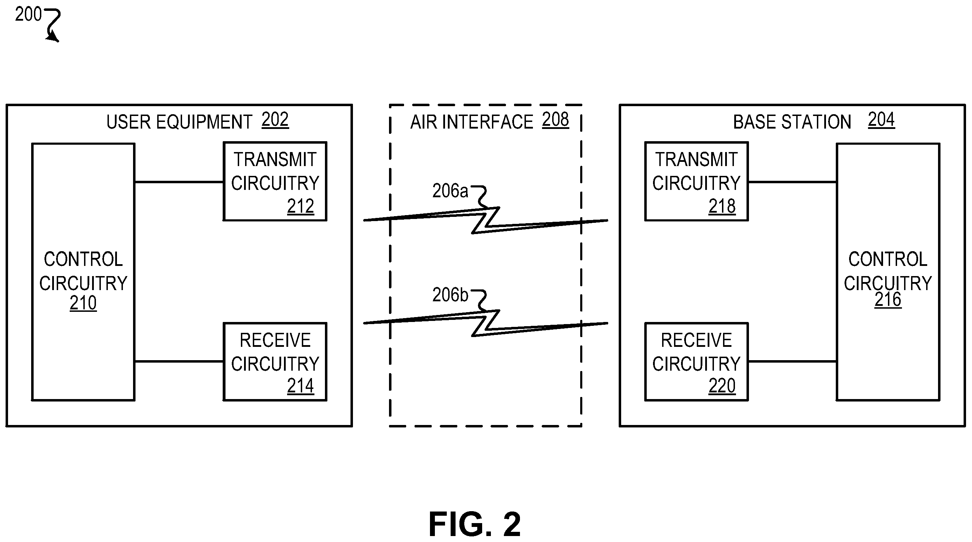

FIG. 2 illustrates a wireless network 200, in accordance with some embodiments. The wireless network 200 includes a UE 202 and a base station 204 connected via one or more channels 206A, 206B across an air interface 208. The UE 202 and base station 204 communicate using a system that supports controls for managing the access of the UE 202 to a network via the base station 204.

For purposes of convenience and without limitation, the wireless network 200 is described in the context of Long Term Evolution (LTE) and Fifth Generation (5G) New Radio (NR) communication standards as defined by 3GPP TSs. The wireless network 200 may be a Non-Standalone (NSA) network that incorporates both LTE and NR, for example, a E-UTRA (Evolved Universal Terrestrial Radio Access)-NR Dual Connectivity (EN-DC) network, and NE-DC network. However, the wireless network 200 may also be a Standalone (SA) network that incorporates only NR. Furthermore, other types of communication standards are possible, including future 3GPP systems (e.g., Sixth Generation (6G)) systems, Institute of Electrical and Electronics Engineers (IEEE) 802.11 technology, IEEE 802.16 protocols (e.g., WMAN, WiMAX, etc.), or the like. While aspects may be described herein using terminology commonly associated with 5G NR, aspects of the present disclosure can be applied to other systems, such as 3G, 4G, and/or systems subsequent to 5G (e.g., 6G).

In the wireless network 200, the UE 202 and any other UE in the system may be, for example, laptop computers, smartphones, tablet computers, machine-type devices such as smart meters or specialized devices for healthcare monitoring, remote security surveillance systems, intelligent transportation systems, or any other wireless devices with or without a user interface. In network 200, the base station 204 provides the UE 202 network connectivity to a broader network (not shown). This UE 202 connectivity is provided via the air interface 208 in a base station service area provided by the base station 204. In some embodiments, such a broader network may be a wide area network operated by a cellular network provider, or may be the Internet. Each base station service area associated within the base station 204 is supported by one or more antennas integrated with the base station 204. The service areas are divided into a number of sectors associated with certain antennas. Such sectors may be physically associated with fixed antennas or may be assigned to a physical area with tunable antennas or antenna settings adjustable in a beamforming process used to direct a signal to a particular sector.

The UE 202 includes control circuitry 210 coupled with transmit circuitry 212 and receive circuitry 214. The transmit circuitry 212 and receive circuitry 214 may each be coupled with one or more antennas. The control circuitry 210 may be adapted to perform operations associated with implementing enhanced UL DMRS configurations. The control circuitry 210 may include various combinations of application-specific circuitry and baseband circuitry. The transmit circuitry 212 and receive circuitry 214 may be adapted to transmit and receive data, respectively, and may include radio frequency (RF) circuitry or front-end module (FEM) circuitry.

In various embodiments, aspects of the transmit circuitry 212, receive circuitry 214, and control circuitry 210 may be integrated in various ways to implement the circuitry described herein. The control circuitry 210 may be adapted or configured to perform various operations such as those described elsewhere in this disclosure related to a UE. The transmit circuitry 212 may transmit a plurality of multiplexed uplink physical channels. The plurality of uplink physical channels may be multiplexed according to time division multiplexing (TDM) or frequency division multiplexing (FDM) along with carrier aggregation. The transmit circuitry 212 may be configured to receive block data from the control circuitry 210 for transmission across the air interface 208. Similarly, the receive circuitry 214 may receive a plurality of multiplexed downlink physical channels from the air interface 208 and relay the physical channels to the control circuitry 210. The plurality of downlink physical channels may be multiplexed according to TDM or FDM along with carrier aggregation. The transmit circuitry 212 and the receive circuitry 214 may transmit and receive both control data and content data (e.g., messages, images, video, etc.) structured within data blocks that are carried by the physical channels.

FIG. 2 also illustrates the base station 204. In embodiments, the base station 204 may be an NG radio access network (RAN) or a 5G RAN, an E-UTRAN, a non-terrestrial cell, or a legacy RAN, such as a UTRAN or GERAN. As used herein, the term "NG RAN" or the like may refer to the base station 204 that operates in an NR or 5G wireless network 200, and the term "E-UTRAN" or the like may refer to a base station 204 that operates in an LTE or 4G wireless network 200. The base station 204 utilizes connections (or channels) 206A, 206B, each of which includes a physical communications interface or layer.

The base station 204 circuitry may include control circuitry 216 coupled with transmit circuitry 218 and receive circuitry 220. The transmit circuitry 218 and receive circuitry 220 may each be coupled with one or more antennas that may be used to enable communications via the air interface 208.

The control circuitry 216 may be adapted to perform operations for implementing enhanced UL DMRS configurations. The transmit circuitry 218 and receive circuitry 220 may be adapted to transmit and receive data, respectively, to any UE connected to the base station 204. The transmit circuitry 218 may transmit downlink physical channels comprised of a plurality of downlink subframes. The receive circuitry 220 may receive a plurality of uplink physical channels from various UEs, including the UE 202.

In some embodiments, the one or more channels 206A, 206B are illustrated as an air interface to enable communicative coupling, and can be consistent with cellular communications protocols, such as a GSM protocol, a CDMA network protocol, a PTT protocol, a POC protocol, a UMTS protocol, a 3GPP LTE protocol, an Advanced long term evolution (LTE-A) protocol, a LTE-based access to unlicensed spectrum (LTE-U), a 5G protocol, a NR protocol, an NR-based access to unlicensed spectrum (NR-U) protocol, and/or any of the other communications protocols discussed herein. In embodiments, the UE 202 may directly exchange communication data via a ProSe interface. The ProSe interface may alternatively be referred to as a SL interface and may comprise one or more logical channels, including but not limited to a PSCCH, a PSSCH, a PSDCH, and a PSBCH.

In some embodiments, the UE 202 is configured to implement one or more enhanced UL DMRS configurations. The UE 202 may be preconfigured to select one of the enhanced UL DMRS configurations (e.g., based on 3GPP standards) or may receive signaling from the base station 204 indicating the enhanced UL DMRS configuration to use. As described in more detail below, the one or more enhanced UL DRMS configurations support at least eight antenna ports. In some examples, the enhanced UL DRMS configurations support eight antenna ports in a single DMRS symbol. Accordingly, among other benefits, the enhanced UL DMRS configurations can support at least eight antenna ports when PTRS is enabled.

In some embodiments, a first enhanced UL DMRS configuration uses length-4 FD-OCC (FD-OCC4) and two CDM groups in a single DMRS symbol. This configuration supports up to eight antenna ports transmission in the single DMRS symbol. The first UL DMRS configuration can include one or more DMRS symbols. In one example, the UE 202 uses Equation [1] to generate the DMRS for each resource element (RE) in the DMRS symbols: ${a}_{k , l}^{p , u} = {w}_{f} \left(k′\right) {w}_{l} \left(l′\right) r \left(4n+k′\right) .$ In Equation [1], k represents a subcarrier index, l represents a symbol index, p represents an antenna port index, u represents a subcarrier spacing scaling factor, w₁ represents a TD-OCC sequence, w_{f} represents a FD-OCC sequence. Further, r is a base DMRS sequence shown in Equation [2] (also described in 3GPP TS 38.211, Release 15, Section 6.4.1.1.1): $r \left(n\right) = \frac{1}{\sqrt{2}} \left(1-2⋅c\left(2n\right)\right) + j \frac{1}{\sqrt{2}} \left(1-2⋅c\left(2n+1\right)\right) .$ In these equations, n has a range of values between 0 and a total number of allocated resource elements for a DMRS minus 1. In some examples, the UE 202 determines the values of k', n, and k as follows:
- $k ′ = 0 , 1 , 2 , 3$
- $n = 0 , 1 , 2 , …$
- $k = 4 n + k ′ + delta ,$ where delta = 0, 4.

In some examples, the UE 202 selects delta (a frequency-domain offset) and w_{f} for each port according to Table 1:

**Table 1**

| Port index | CDM group | Delta | W_{f} |
|---|---|---|---|
| 0 | 0 | 0 | [1, 1, 1, 1] |
| 1 | 0 | 0 | [1, 1, -1, -1] |
| 2 | 0 | 0 | [1, -1, -1, 1] |
| 3 | 0 | 0 | [-1, -1, 1, 1] |
| 4 | 1 | 4 | [1, -1, 1, -1] |
| 5 | 1 | 4 | [-1, 1, -1, 1] |
| 6 | 1 | 4 | [-1, 1, 1, -1] |
| 7 | 1 | 4 | [-1, -1, -1, -1] |

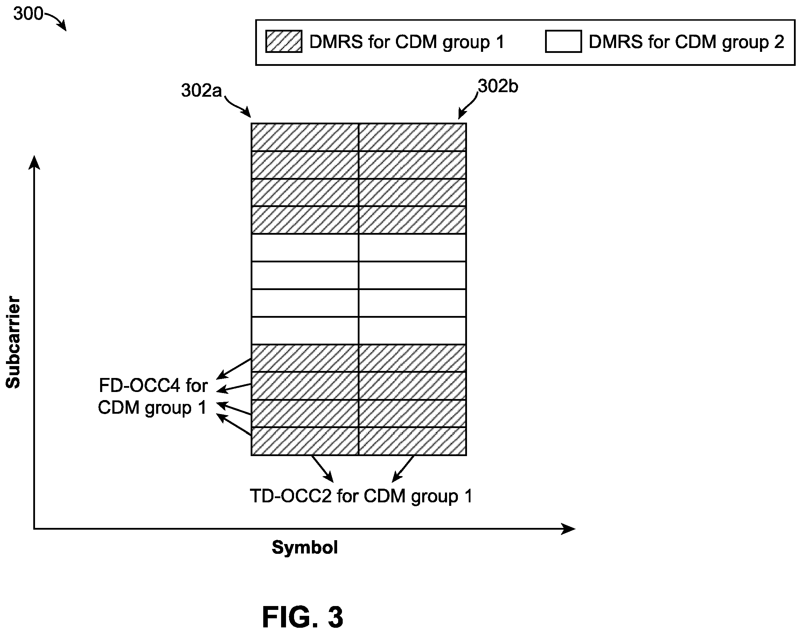

FIG. 3 illustrates an example pattern 300 of a first enhanced DMRS configuration, in accordance with some embodiments. Note that the pattern 300 is for a resource block and that the UE 202 may transmit DMRS in several resource blocks across a bandwidth allocated to the UE ("allocated bandwidth"). As shown in FIG. 3, the pattern 300 uses FD-OCC4 and two CDM groups in each DMRS symbol (labeled as symbols 302a, 302b). Further, each symbol supports up to eight antenna ports transmission. In particular, four subcarriers designated for CDM group 1 can include up to four antenna ports, and four subcarriers designated for CDM group 2 can include up to four antenna ports. The first enhanced DMRS configuration can therefore support up to eight antenna ports when PTRS is enabled and only one DMRS symbol is transmitted.

However, as shown in FIG. 3, the number of subcarriers assigned to CDM group 1 and CDM group 2 within a resource block may be different. Thus, the aggregate number of subcarriers for CDM group 1 and the aggregate number of subcarriers for CDM group 2 across the allocated bandwidth may be different. In some embodiments, in order to avoid the aggregate number of subcarriers assigned to each of CDM group 1 and CDM group 2 from being different, the UE 202 is configured to use an even number of physical resource blocks (PRBs) for transmitting the DMRS. Additionally, the UE 202 sets the aggregate DMRS for CDM group 1 and CDM group 2 to be equal to one another.

In some embodiments, a second enhanced UL DMRS configuration uses FD-OCC2 and four CDM groups for one DMRS symbol. The second enhanced UL DMRS configuration supports eight antenna ports transmission in a single DMRS symbol. In one example, the UE 202 uses Equation [3] to generate the DMRS for each RE: ${a}_{k , l}^{p , u} = {w}_{f} \left(k′\right) {w}_{l} \left(l′\right) r \left(2n+k′\right) .$ In Equation [3], k represents a subcarrier index, l represents a symbol index, p represents a port index, u represents a subcarrier spacing scaling factor, r is a base DMRS sequence shown in Equation [2], wₗ represents a TD-OCC sequence, w_{f} represents a FD-OCC sequence. In some examples, the UE 202 is configured multiplex CDM groups to consecutive resource elements. In these examples, the UE 202 determines the values of k', n, and k as follows:
- $k ′ = 0 , 1$
- $n = 0 , 1 , 2 , …$
- $k = 4 n + k ′ + delta ,$ where delta = 0, 2, 4, 6.

In other examples, the UE 202 is configured multiplex CDM groups to non-consecutive resource elements. In these examples, the UE 202 determines the values of k', n, and k as follows:
- $k ′ = 0 , 1$
- $n = 0 , 1 , 2 , …$
- $k = 4 n + 4 k ′ + delta ,$ where delta = 0, 1, 2, 3

In some examples, the UE 202 is configured to select delta and w_{f} for each port according to Table 2:

**Table 2**

| **Port index** | **CDM group** | **Delta** | **w_{f}** |
|---|---|---|---|
| 0 | 0 | 0 | [1, 1] |
| 1 | 0 | 0 | [1, -1] |
| 2 | 1 | 2 | [1, 1] |
| 3 | 1 | 2 | [1, -1] |
| 4 | 2 | 4 | [1, 1] |
| 5 | 2 | 4 | [1, -1] |
| 6 | 3 | 6 | [1, 1] |
| 7 | 3 | 6 | [1, -1] |

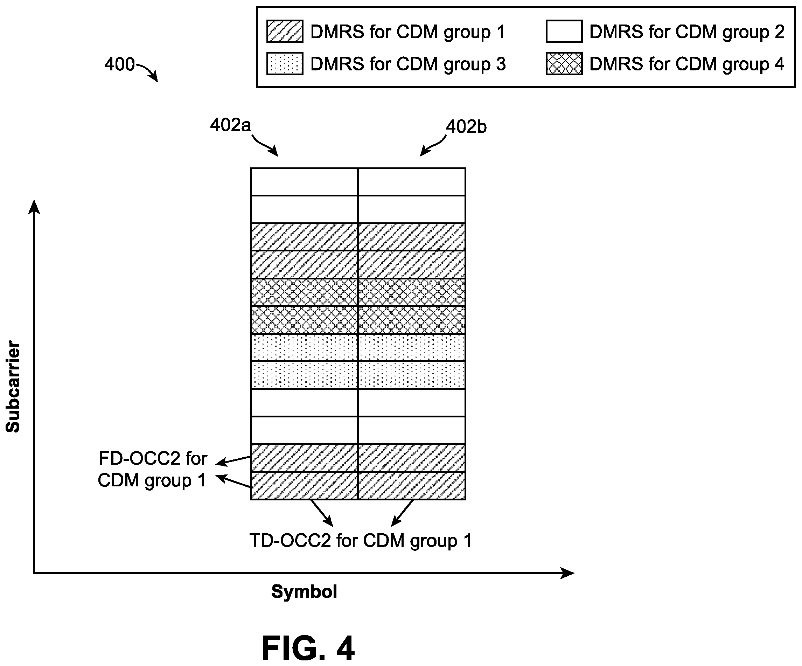

FIG. 4 illustrates an example pattern 400 of a second enhanced DMRS configuration, in accordance with some embodiments. Note that the pattern 400 is for a resource block and that the UE 202 may transmit DMRS in several resource blocks across the allocated bandwidth. As shown in FIG. 4, the pattern 400 uses FD-OCC2 and four CDM groups in each DMRS symbol (labeled as symbols 402a, 402b). Further, each symbol supports up to eight antenna ports transmission. In particular, two subcarriers designated for CDM group 1 can include up to two antenna ports, two subcarriers designated for CDM group 2 can include up to two antenna ports, two subcarriers designated for CDM group 3 can include up to two antenna ports, and two subcarriers designated for CDM group 4 can include up to two antenna ports. The second enhanced DMRS configuration can therefore support up to eight antenna ports when PTRS is enabled and only one DMRS symbol is transmitted.

In some examples, the resource blocks used by the UE 202 for transmitting DMRS in the second enhanced UL DMRS configuration are configured to be an even number. This ensures the same channel estimation and decoding performance for the different antenna ports and their associated layers.

However, in both the first and second enhanced UL DMRS configurations, the resource mapping pattern for different resource blocks in the allocated bandwidth could be different. Due to this, a base station receiving DMRS from UEs operating in multiuser multiple-input/multiple-output (MU-MIMO) may not be able to distinguish between the antenna ports for each UE. In some embodiments, to support MU-MIMO operation in the first and second enhanced UL DMRS configurations, the resource mapping patterns are defined based on the resource blocks in the entire bandwidth. Such resource mapping patterns are referred to as network-specific resource mapping patterns. In an example, a UE can identify the resource mapping pattern to use based on a reference point for a current active bandwidth part and an allocated resource block index. Alternatively, the UE can identify the resource mapping pattern based on a common reference point (e.g., point A) and the allocated a resource block index.

In some embodiments, the resource mapping pattern can be UE-specific. This configuration can be used for single user-MIMO (SU-MIMO) or MU-MIMO with fully overlapped allocated resource blocks. In these embodiments, the resource mapping pattern is generated based on the allocated resource blocks for the UE.

In some embodiments, the UE 202 determines whether to use a network-specific resource mapping pattern or a UE-specific resource mapping pattern based on higher layer signaling (e.g., Radio Resource Control [RRC] or a Medium Access Control [MAC] Control Element [CE]), downlink control information (DCI), a number of co-scheduled UEs, and/or a scheduled bandwidth. Alternatively, the UE 202 may be configured by specification whether to use network-specific resource mapping patterns or UE-specific resource mapping patterns. In some examples, the network-specific resource mapping patterns can be common for bandwidth parts (BWPs) with the same numerology as the UE, invariant with the starting resource block of a BWP. That is, the resource mapping pattern is applied from the first PRB from the network side, instead of the first scheduled physical resource block for a UE. For example, if there are 100 RBs in the entire bandwidth, and BWP for a UE is configured as RB {51,52,...100}, the mapping pattern starts from RB #1 (as opposed to RB #51).

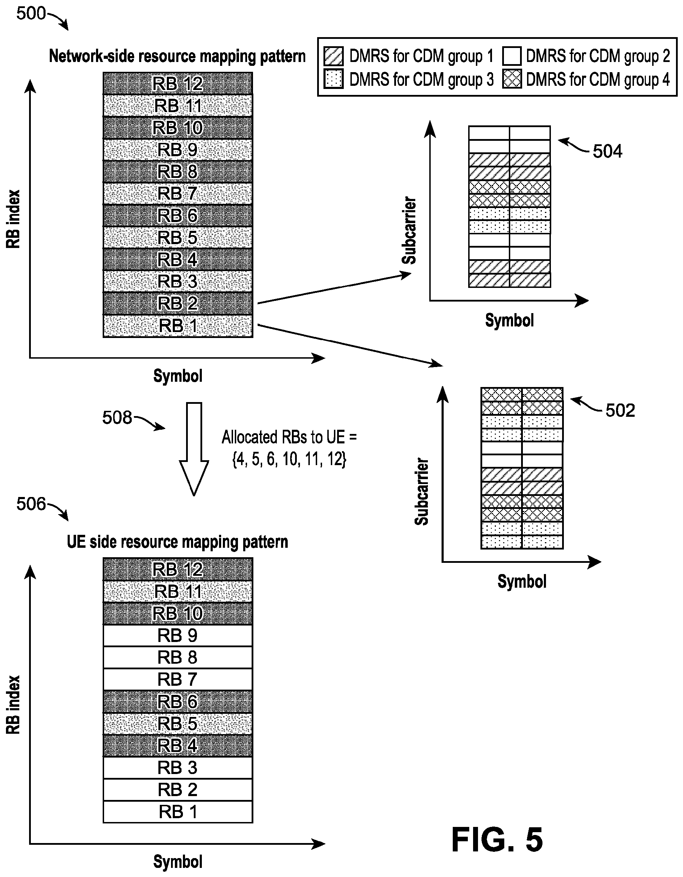

FIG. 5 illustrates an example network-side resource mapping pattern 500, in accordance with some embodiments. In this example, the network provides UEs with the network-side resource mapping pattern 500. Each UE can use the mapping pattern 500 to determine the resource mapping pattern to use in each resource block, perhaps based on a reference point for a current active bandwidth part and an allocated resource block index. Alternatively, a UE can identify the resource mapping pattern based on a common reference point (e.g., point A) and the allocated resource block index. For example, a UE can determine to use a resource mapping pattern 502 in resource block 1 and a resource mapping pattern 504 in resource block 2. As an example, the UE, perhaps by way of signaling 508, is allocated resource blocks (4, 5, 6, 10, 11, 12). The UE can identify the mapping patterns to use in each of those resource blocks using the described techniques.

In some embodiments, a third enhanced UL DMRS configuration involves generating a DMRS pattern based on low Peak-to-Average Power Ratio (PAPR) sequences. In this configuration, FD-OCC and TD-OCC are not used. In one example, the UE 202 is configured to use the low PAPR sequences defined in 3GPP TS 38.211, Section 5.2.2. In an example, the low-PAPR sequence ${r}_{u , ν}^{\left(α, δ\right)} \left(n\right)$ is defined by a cyclic shift *α* of a base sequence *r̅_{u,v}*(*n*) according to Equation [4]: ${r}_{u , ν}^{\left(α, δ\right)} \left(n\right) = {e}^{jαn} {\overline{r}}_{u , ν} \left(n\right) , 0 \leq n < {M}_{ZC}$ In Equation [4], ${M}_{ZC} = {mN}_{sc}^{RB} / {2}^{δ}$ is the length of the sequence. Multiple sequences are defined from a single base sequence through different values of *α* and *δ*.

In this example, the UE 202 applies different cyclic shifts to different antenna ports. Furthermore, the UE 202 is allocated with consecutive RBs, perhaps resource allocation type 1 as defined in 3GPP TS 38.214, Section 6.1.2.2.2. This configuration can support at least eight antenna ports. In another example, the UE 202 is allocated with consecutive RBs or non-consecutive RBs, perhaps resource allocation type 0 and/or resource allocation type 1 as defined in 3GPP TS 38.214, Section 6.1.2.2.1.

In some embodiments, the DMRS in this configuration is transmitted in a resource block-wise manner. In these embodiments, the UE 202 assigns each resource block group (RBG) a respective PAPR sequence. In some examples, the UE 202 uses sequence hopping and/or cyclic shift hopping to reduce the PAPR. In these examples, for the resource allocation type 0, the UE 202 is configured to generate the DMRS sequence with sequence hopping and/or cyclic shift hopping pattern or offset for each RBG. For sequence hopping, the UE 202 can determine the initial seed for the random sequence based on an RBG index or a starting resource block index. For cyclic shift hopping, the UE 202 can determine the cyclic shift based on the RBG index or the starting RB index.

In some embodiments, to support MU-MIMO with partial overlapping in the network, the UE 202 is configured to use X CDM groups (e.g., 2 CDM groups). Then, different UEs can use different CDM groups to support MU-MIMO with partial overlapping. Within examples, the UE 202 can determine the value of X based on a predefined value, higher layer signaling or DCI, or based on a scheduled bandwidth or a RBG size. If the number of scheduled RBs is too small, too many CDM groups would lead to smaller number of REs for each DMRS port, which could cause performance degradation.

In some embodiments, a fourth enhanced UL DMRS configuration involves time division multiplexed (TDM'ed) CDM groups. In this configuration, the UE 202 maps different CDM groups to different symbols. In a first type of the fourth enhanced UL DMRS configuration, four CDM groups are supported. In this first type, the UE 202 uses two frequency division multiplexed (FDM'ed) CDM groups, two TDM'ed CDM groups, and FD-OCC2 to generate the resource mapping pattern. In a second type of the fourth enhanced UL DMRS configuration, six CDM groups are supported. In this second type, the UE 202 uses three FDM'ed CDM groups, two TDM'ed CDM groups, and FD-OCC2. Because these two types use FD-OCC2 (as opposed to TD-OCC2), the two types can be used when TD-OCC2 is disabled (e.g., when PTRS is enabled).

In some embodiments, the UE 202 uses Equation [4] to generate the DMRS for each resource element (RE): ${a}_{k , l}^{p , u} = {w}_{f} \left(k′\right) r \left(2n+k′\right)$ In Equation [4], k represents a subcarrier index, l represents a symbol index, p represents an antenna port index, u represents a subcarrier spacing scaling factor, r is a base DMRS sequence shown in Equation [2], and w_{f} represents a FD-OCC sequence. In some examples, the UE 202 determines the values of k', n, l, k for type 1 as follows:
- $k ′ = 0 , 1 , 2 , 3$
- $n = 0 , 1 , 2 , …$
- $k = 4 n + 2 k ′ + delta ,$ where delta = 0, 1
- l = l_0, l_0 + delta', where l_0 is a starting symbol for DMRS, and where delta' = 0, 1.
In some examples, for type 1, the UE 202 selects delta, delta' (a time-domain offset), and w_{f} for each port according to Table 3:

**Table 3**

| **Port index** | **CDM group** | **Delta and delta'** | **W_{f}** |
|---|---|---|---|
| 0 | 0 | 0, 0 | [1, 1] |
| 1 | 0 | 0, 0 | [1, -1] |
| 2 | 1 | 1, 0 | [1, 1] |
| 3 | 1 | 1, 0 | [1, -1] |
| 4 | 2 | 0, 1 | [1, 1] |
| 5 | 2 | 0, 1 | [1, -1] |
| 6 | 3 | 1, 1 | [1, 1] |
| 7 | 3 | 1, 1 | [1, -1] |

In some examples, the UE 202 determines the values of k', n, l, k for type 2 as follows:
- $k ′ = 0 , 1 , 2 , 3$
- $n = 0 , 1 , 2 , …$
- $k = 6 n + k ′ + delta ,$ where delta = 0, 2, 4
- l = l_0, l_0 + delta', where l_0 is a starting symbol for DMRS, and where delta' = 0, 1, 2, 4.
In some examples, for type 2, the UE 202 selects delta, delta', and w_{f} for each port according to Table 4:

**Table 4**

| **Port index** | **CDM group** | **Delta and delta'** | **W_{f}** |
|---|---|---|---|
| 0 | 0 | 0, 0 | [1, 1] |
| 1 | 0 | 0, 0 | [1, -1] |
| 2 | 1 | 2, 0 | [1, 1] |
| 3 | 1 | 2, 0 | [1, -1] |
| 4 | 2 | 4, 0 | [1, 1] |
| 5 | 2 | 4, 0 | [1, -1] |
| 6 | 3 | 0, 1 | [1, 1] |
| 7 | 3 | 0, 1 | [1, -1] |
| 8 | 4 | 0, 2 | [1, 1] |
| 9 | 4 | 0, 2 | [1, -1] |
| 10 | 5 | 0, 4 | [1, 1] |
| 11 | 5 | 0, 4 | [1, -1] |

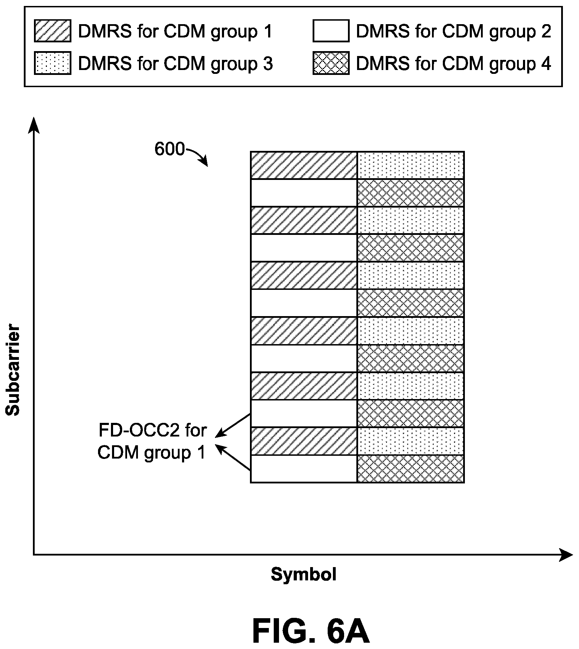

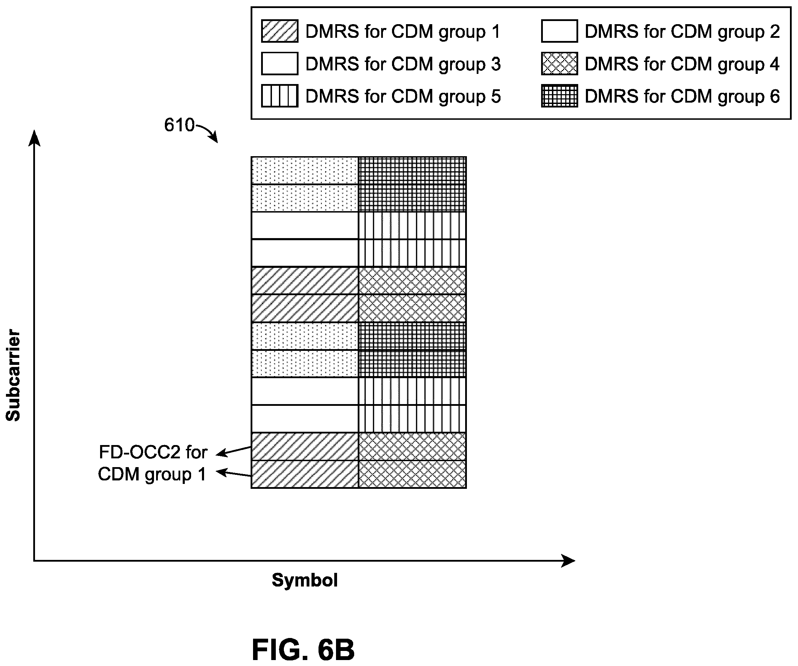

FIG. 6A and FIG. 6B illustrate example patterns of a fourth enhanced DMRS configuration, in accordance with some embodiments. Specifically, FIG. 6A illustrates an example pattern 600 of the first type of fourth enhanced DMRS configuration, and FIG. 6B illustrates an example pattern 610 of the second type of fourth enhanced DMRS configuration.

Turning to FIG. 6A, the pattern 600 is for a resource block and the UE 202 may transmit DMRS in several resource blocks across the allocated bandwidth. As shown in FIG. 6A, the pattern 600 uses two FDM'ed CDM groups, two TDM'ed CDM groups, and FD-OCC2 to generate the resource mapping pattern 600. The pattern 600 can support DRMS configurations up to eight antenna ports. Specifically, the resource elements dedicated to each of the CDM groups can support two antenna ports, for a total of eight antenna ports.

Turning to FIG. 6B, the pattern 610 is for a resource block and the UE 202 may transmit DMRS in several resource blocks across the allocated bandwidth. As shown in FIG. 6B, the pattern 610 uses three FDM'ed CDM groups, two TDM'ed CDM groups, and FD-OCC2 to generate the resource mapping pattern 610. The pattern 610 can support DRMS configurations up to twelve antenna ports. Specifically, the resource elements dedicated to each of the CDM groups can support two antenna ports, for a total of twelve antenna ports.

In some embodiments, the energy per resource element (EPRE) ratio between PUSCH and DMRS in one symbol can be determined based on a number of CDM groups without data in the symbol. Such embodiments maintain a consistent transmission power across symbols. In a first option, a base station indicates via DCI a total number of CDM groups across symbols. In a second option, the base station indicates via DCI a total number of CDM groups per DMRS symbol. Tables 5 and 6 show the results of examples of implementing options 1 and 2, respectively.

**Table 5**

| **Number of CDM groups without data across DMRS symbols** | **EPRE ratio for Example 1 for DMRS symbol 1 and 2 [dB]** | **EPRE ratio for Example 2 for DMRS symbol 1 and 2 [dB]** |
|---|---|---|
| 1 | [0, -] | [0, -] |
| 2 | [-3, -] | [-3, -] |
| 3 | [-3, 0] | [-4.77, -] |
| 4 | [-3, -3] | [-4.77, 0] |
| 5 | - | [-4.77, -3] |
| 6 | - | [-4.77, -4.77] |

**Table 6**

| **Number of CDM groups without data for DMRS symbol X** | **EPRE ratio for Example 1 for DMRS symbol X [dB]** | **EPRE ratio for Example 2 for DMRS symbol X [dB]** |
|---|---|---|
| 1 | 0 | 0 |
| 2 | -3 | -3 |
| 3 | - | -4.77 |

In some embodiments, a fifth enhanced UL DMRS configuration involves TDM and/or FDM based low PAPR sequences. In these embodiments, different ports are mapped to different comb indices (e.g., starting RE offset for the DMRS), symbols, or cyclic shifts. Further, in cases of TDM and/or FDM, the proper power scaling is applied to different DMRS resource elements. More specifically, since the EPRE ratio can be different for different ports/symbols, the UE may apply different power for different DMRS ports.

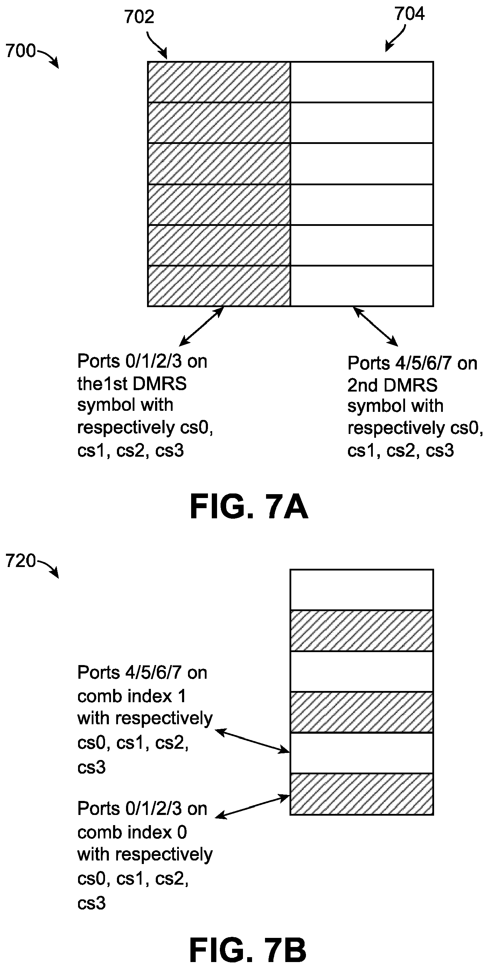

FIG. 7A and FIG. 7B illustrate example patterns of a fifth enhanced DMRS configuration, in accordance with some embodiments. Specifically, FIG. 7A illustrates a first example pattern 700 of the fifth enhanced DMRS configuration, and FIG. 7B illustrates a second example pattern 710 of the fifth enhanced DMRS configuration. As shown in FIG. 7A, in the pattern 700, four ports (e.g., ports 0/1/2/3) are mapped onto a first DMRS symbol 702 with cyclic shift of 0 (cs0), cyclic shift of 1 (cs1), cyclic shift of 2 (cs2), cyclic shift of 3 (cs3), respectively. Further, four other ports (e.g., ports 4/5/6/7) are mapped onto a second DMRS symbol 704 with cs0, cs1, cs2, cs3, respectively. As shown in FIG. 7B, in the pattern 710, four ports (e.g., ports 0/1/2/3) are mapped on comb index 0 with cs0, cs1, cs2, cs3, respectively. Further, four other ports (e.g., ports 4/5/6/7) are mapped on comb index 1 with cs0, cs1, cs2, cs3, respectively.

In some embodiments, a sixth enhanced UL DMRS configuration involves using FD-OCC2 and TD-OCC2 (like the existing solutions in FIGS. 1A, 1B). The sixth enhanced UL DMRS configuration additionally uses TDM to multiplex the codeword (CW) to layer mapping. This involves mapping the first half of the layers to some resource elements, and mapping the remaining layers to other resource elements. This TDM operation means some symbols are used for CW1 and some other symbols are used for CW2. That is, different CWs are used for different layers, e.g., layer 1-4 for CW1 and layer 5-8 for CW2. When four part DMRS is used, some of the ports are from a first CDM group of four ports and some are from a second CDM group of four ports. In some examples, for 2L symbols allocation, DMRS symbols are on symbols 0 and L. Further, the first 4 (or 6, depending on DMRS Type 1 or Type 2) data layers are mapped through symbols 1 to L-1 and the second 4 (or 6) data layers are mapped to symbols L+1 to 2L-1.

In some embodiments, the sixth enhanced UL DMRS configuration can be enabled by RRC signaling, by DCI, or be determined by whether eight ports uplink transmission is enabled or not. When the sixth enhanced UL DMRS configuration is used, PT-RS can be present. Alternatively, using an existing eight-port DMRS pattern (e.g., shown in FIGS. 1A, 1B) or the sixth enhanced UL DMRS configuration may be determined based on the PT-RS configuration and/or the scheduling DCI. For example, if the PTRS is enabled and number of DMRS symbol is indicated as one by DCI, the legacy DMRS pattern is used. Alternatively, if the PTRS is enabled and the number of DMRS symbol is indicated as two by DCI, the sixth enhanced UL DMRS configuration is used. In some examples, when enabled, the sixth enhanced UL DMRS configuration can be applied for PUSCH scheduled by dynamic grant and/or configured grant.

In some examples, the FD-OCC in the above configurations can be replaced by FDM'ed operation or cyclic shift based operation for larger subcarrier spacing (SCS) case, e.g., 960 (kilo Hertz) kHz, 480 kHz, which can be configured by a base station or determined based on SCS.

In some embodiments, a seventh enhanced UL DMRS configuration involves enabling TD-OCC (e.g., a second half of DMRS ports or a second symbol of DMRS) for some PTRS patterns. In one example, for PTRS with time domain pattern of every other symbol or every 4th symbol, the second symbol DMRS can be enabled. In some examples, an RRC parameter may be introduced to enable such configuration, which can be based on a UE capability. In some examples, this configuration may be applicable for uplink transmission of eight or more antenna ports.

In some embodiments, an enhanced PTRS pattern is used. The enhanced PTRS pattern supports intra-symbol phase noise compensation, e.g., group based PTRS, where in one symbol, the PTRS is divided into N groups, each group takes M consecutive resource elements, and the N groups are uniformly distributed.

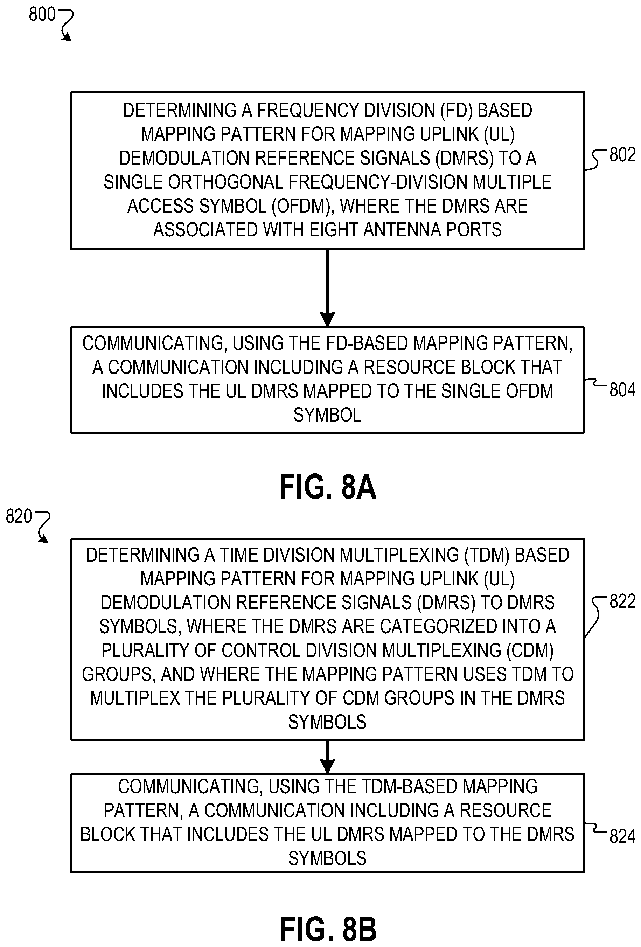

FIG. 8A illustrates a flowchart of an example method 800, in accordance with some embodiments. For clarity of presentation, the description that follows generally describes method 800 in the context of the other figures in this description. For example, method 800 can be performed by UE 202 of FIG. 2. It will be understood that method 800 can be performed, for example, by any suitable system, environment, software, hardware, or a combination of systems, environments, software, and hardware, as appropriate. In some implementations, various steps of method 800 can be run in parallel, in combination, in loops, or in any order.

At step 802, method 800 involves determining a frequency division (FD) based mapping pattern for mapping uplink (UL) demodulation reference signals (DMRS) to a single orthogonal frequency-division multiple access symbol (OFDM), where the DMRS are associated with eight antenna ports.

At step 804, method 800 involves communicating, using the FD-based mapping pattern, a communication including a resource block that includes the UL DMRS mapped to the single OFDM symbol.

In some implementations, where the FD-based mapping pattern includes a length-4 FD-orthogonal cover code (FD-OCC4) and two control division multiplexing (CDM) groups.

In some implementations, where communicating, using the FD-based mapping pattern, a communication including a resource block that includes the UL DMRS mapped to the single OFDM symbol includes: generating the DMRS for resource elements in the OFDM symbol using: [1] ${a}_{k , l}^{p , u} = {w}_{f} \left(k′\right) {w}_{l} \left(l′\right) r \left(4n+k′\right)$, where k represents a subcarrier index, l represents a symbol index, p represents an antenna port index, u represents a subcarrier spacing scaling factor, w_l represents a time division (TD) sequence, w_f represents a FD sequence, and r represents a base DMRS sequence.

In some implementations, where k = 4n + k' + delta, where delta is selected from a set {0, 4}, and where k' is selected from a set {0, 1, 2, 3}.

In some implementations, where the FD-based mapping pattern includes a length-2 FD-orthogonal cover code (FD-OCC2) and four control division multiplexing (CDM) groups.

In some implementations, where communicating, using the FD-based mapping pattern, a communication including a resource block that includes the UL DMRS mapped to the single OFDM symbol includes: generating the DMRS for resource elements in the OFDM symbol using: ${a}_{k , l}^{p , u} = {w}_{f} \left(k′\right) {w}_{l} \left(l′\right) r \left(2n+k′\right)$, where k represents a subcarrier index, l represents a symbol index, p represents an antenna port index, u represents a subcarrier spacing scaling factor, w_l represents a time division (TD) sequence, w_f represents a FD sequence, and r represents a base DMRS sequence.

In some implementations, where k = 4n + k' + delta, where delta is selected from a set {0, 2, 4, 6}, and where k' is selected from a set {0, 1}.

In some implementations, where the communication includes a plurality of resource blocks that include DMRS, where a number of the plurality of resource blocks is even.

In some implementations, determining a frequency division (FD) based mapping pattern for mapping uplink (UL) demodulation reference signals (DMRS) involves receiving signaling indicating whether to use a network-specific mapping pattern or a UE-specific mapping pattern.

In some implementations, the signaling is one of higher layer signaling or a downlink control information (DCI).

In some implementations, the higher layer signaling is one of Radio Resource Control (RRC) signaling or a Medium Access Control (MAC) Control Element (CE).

In some implementations, method 800 further involves determining, based on the signaling, to use the network-specific mapping; and in response, determining the FD-based mapping pattern based on one of: (i) a reference point for a current active bandwidth part and an allocated resource block index, or (ii) a common reference point and the allocated resource block index.

FIG. 8B illustrates a flowchart of an example method 820, in accordance with some embodiments. For clarity of presentation, the description that follows generally describes method 820 in the context of the other figures in this description. For example, method 820 can be performed by UE 202 of FIG. 2. It will be understood that method 820 can be performed, for example, by any suitable system, environment, software, hardware, or a combination of systems, environments, software, and hardware, as appropriate. In some implementations, various steps of method 820 can be run in parallel, in combination, in loops, or in any order.

At step 822, method 820 involves determining a time division multiplexing (TDM) based mapping pattern for mapping uplink (UL) demodulation reference signals (DMRS) to DMRS symbols, where the DMRS are categorized into a plurality of control division multiplexing (CDM) groups, and where the mapping pattern uses TDM to multiplex the plurality of CDM groups in the DMRS symbols.

At step 824, method 820 involves communicating, using the TDM-based mapping pattern, a communication including a resource block that includes the UL DMRS mapped to the DMRS symbols.

In some implementations, where communicating, using the TDM-based mapping pattern, a communication comprising a resource block that includes the UL DMRS mapped to the DMRS symbols includes: mapping each of the plurality of CDM groups to a respective DMRS symbol.

In some implementations, where the plurality of CDM groups include four CDM groups, and where the DMRS symbols include two DMRS symbols.

In some implementations, where two of the four CDM groups are mapped to each DMRS symbol.

In some implementations, where the plurality of CDM groups include six CDM groups, and where the DMRS symbols include two DMRS symbols.

In some implementations, where three of the six CDM groups are mapped to each DMRS symbol.

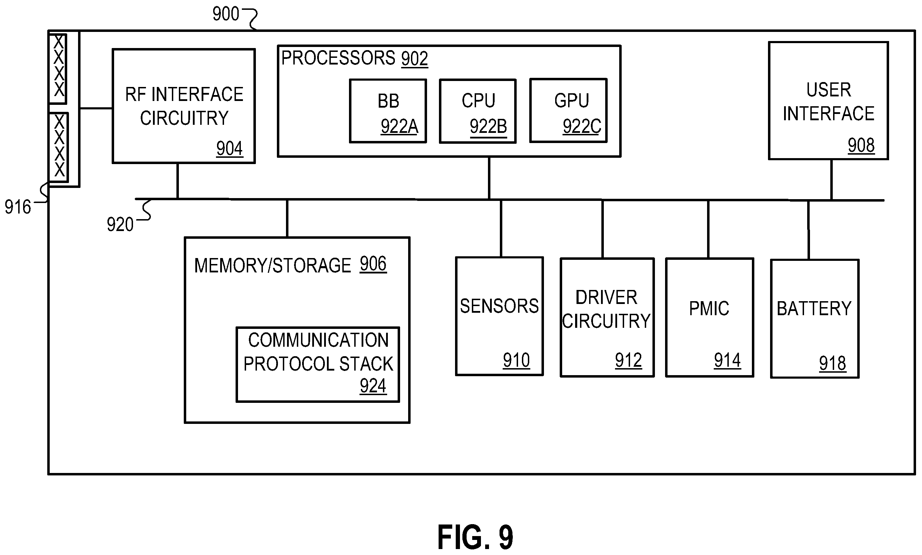

FIG. 9 illustrates a UE 900, in accordance with some embodiments. The UE 900 may be similar to and substantially interchangeable with UE 202 of FIG. 2.

The UE 900 may be any mobile or non-mobile computing device, such as, for example, mobile phones, computers, tablets, industrial wireless sensors (for example, microphones, carbon dioxide sensors, pressure sensors, humidity sensors, thermometers, motion sensors, accelerometers, laser scanners, fluid level sensors, inventory sensors, electric voltage/current meters, actuators, etc.), video surveillance/monitoring devices (for example, cameras, video cameras, etc.), wearable devices (for example, a smart watch), relaxed-IoT devices.

The UE 900 may include processors 902, RF interface circuitry 904, memory/storage 906, user interface 908, sensors 910, driver circuitry 912, power management integrated circuit (PMIC) 914, one or more antennas 916, and battery 918. The components of the UE 900 may be implemented as integrated circuits (ICs), portions thereof, discrete electronic devices, or other modules, logic, hardware, software, firmware, or a combination thereof. The block diagram of FIG. 9 is intended to show a high-level view of some of the components of the UE 900. However, some of the components shown may be omitted, additional components may be present, and different arrangement of the components shown may occur in other implementations.

The components of the UE 900 may be coupled with various other components over one or more interconnects 920, which may represent any type of interface, input/output, bus (local, system, or expansion), transmission line, trace, optical connection, etc. that allows various circuit components (on common or different chips or chipsets) to interact with one another.

The processors 902 may include processor circuitry such as, for example, baseband processor circuitry (BB) 922A, central processor unit circuitry (CPU) 922B, and graphics processor unit circuitry (GPU) 922C. The processors 902 may include any type of circuitry or processor circuitry that executes or otherwise operates computer-executable instructions, such as program code, software modules, or functional processes from memory/storage 906 to cause the UE 900 to perform operations as described herein.

In some embodiments, the processors 902 may be configured to determine a frequency division (FD) based mapping pattern for mapping uplink (UL) demodulation reference signals (DMRS) to a single orthogonal frequency-division multiple access symbol (OFDM), where the DMRS are associated with eight antenna ports. Additionally and/or alternatively, the processors 902 may be configured to generate, using the FD-based mapping pattern, a communication including a resource block that includes the single OFDM symbol.

In some embodiments, the processors 902 may be configured to determine a time division multiplexing (TDM) based mapping pattern for mapping uplink (UL) demodulation reference signals (DMRS) to DMRS symbols, where the DMRS are categorized into a plurality of control division multiplexing (CDM) groups, and where the mapping pattern uses TDM to multiplex the plurality of CDM groups in the DMRS symbols. Additionally and/or alternatively, the processors 902 may be configured to generate, using the TDM-based mapping pattern, a communication including a resource block that includes the DMRS symbols.

In some embodiments, the baseband processor circuitry 922A may access a communication protocol stack 924 in the memory/storage 906 to communicate over a 3GPP compatible network. In general, the baseband processor circuitry 922A may access the communication protocol stack to: perform user plane functions at a PHY layer, MAC layer, RLC layer, PDCP layer, SDAP layer, and PDU layer; and perform control plane functions at a PHY layer, MAC layer, RLC layer, PDCP layer, RRC layer, and a non-access stratum layer. In some embodiments, the PHY layer operations may additionally/alternatively be performed by the components of the RF interface circuitry 904. The baseband processor circuitry 922A may generate or process baseband signals or waveforms that carry information in 3GPP-compatible networks. In some embodiments, the waveforms for NR may be based cyclic prefix OFDM "CP-OFDM" in the uplink or downlink, and discrete Fourier transform spread OFDM "DFT-S-OFDM" in the uplink.

The memory/storage 906 may include one or more non-transitory, computer-readable media that includes instructions (for example, communication protocol stack 924) that may be executed by one or more of the processors 902 to cause the UE 900 to perform various operations described herein. The memory/storage 906 include any type of volatile or non-volatile memory that may be distributed throughout the UE 900. In some embodiments, some of the memory/storage 906 may be located on the processors 902 themselves (for example, L1 and L2 cache), while other memory/storage 906 is external to the processors 902 but accessible thereto via a memory interface. The memory/storage 906 may include any suitable volatile or non-volatile memory such as, but not limited to, dynamic random access memory (DRAM), static random access memory (SRAM), erasable programmable read only memory (EPROM), electrically erasable programmable read only memory (EEPROM), Flash memory, solid-state memory, or any other type of memory device technology.

The RF interface circuitry 904 may include transceiver circuitry and radio frequency front module (RFEM) that allows the UE 900 to communicate with other devices over a radio access network. The RF interface circuitry 904 may include various elements arranged in transmit or receive paths. These elements may include, for example, switches, mixers, amplifiers, filters, synthesizer circuitry, control circuitry, etc.

In the receive path, the RFEM may receive a radiated signal from an air interface via antennas 916 and proceed to filter and amplify (with a low-noise amplifier) the signal. The signal may be provided to a receiver of the transceiver that downconverts the RF signal into a baseband signal that is provided to the baseband processor of the processors 902.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna 916.

In various embodiments, the RF interface circuitry 904 may be configured to transmit/receive signals in a manner compatible with NR access technologies.

The antenna 916 may include antenna elements to convert electrical signals into radio waves to travel through the air and to convert received radio waves into electrical signals. The antenna elements may be arranged into one or more antenna panels. The antenna 916 may have antenna panels that are omnidirectional, directional, or a combination thereof to enable beamforming and multiple input, multiple output communications. The antenna 916 may include microstrip antennas, printed antennas fabricated on the surface of one or more printed circuit boards, patch antennas, phased array antennas, etc. The antenna 916 may have one or more panels designed for specific frequency bands including bands in FRI or FR2.

The user interface 908 includes various input/output (I/O) devices designed to enable user interaction with the UE 900. The user interface 908 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes "LEDs" and multi-character visual outputs), or more complex outputs such as display devices or touchscreens (for example, liquid crystal displays "LCDs," LED displays, quantum dot displays, projectors, etc.), with the output of characters, graphics, multimedia objects, and the like being generated or produced from the operation of the UE 900.

The sensors 910 may include devices, modules, or subsystems whose purpose is to detect events or changes in its environment and send the information (sensor data) about the detected events to some other device, module, subsystem, etc. Examples of such sensors include, inter alia, inertia measurement units comprising accelerometers, gyroscopes, or magnetometers; microelectromechanical systems or nanoelectromechanical systems comprising 3-axis accelerometers, 3-axis gyroscopes, or magnetometers; level sensors; flow sensors; temperature sensors (for example, thermistors); pressure sensors; barometric pressure sensors; gravimeters; altimeters; image capture devices (for example, cameras or lensless apertures); light detection and ranging sensors; proximity sensors (for example, infrared radiation detector and the like); depth sensors; ambient light sensors; ultrasonic transceivers; microphones or other like audio capture devices; etc.

The driver circuitry 912 may include software and hardware elements that operate to control particular devices that are embedded in the UE 900, attached to the UE 900, or otherwise communicatively coupled with the UE 900. The driver circuitry 912 may include individual drivers allowing other components to interact with or control various input/output (I/O) devices that may be present within, or connected to, the UE 900. For example, driver circuitry 912 may include a display driver to control and allow access to a display device, a touchscreen driver to control and allow access to a touchscreen interface, sensor drivers to obtain sensor readings of sensors and control and allow access to sensors, drivers to obtain actuator positions of electro-mechanic components or control and allow access to the electro-mechanic components, a camera driver to control and allow access to an embedded image capture device, audio drivers to control and allow access to one or more audio devices.

The PMIC 914 may manage power provided to various components of the UE 900. In particular, with respect to the processors 902, the PMIC 914 may control power-source selection, voltage scaling, battery charging, or DC-to-DC conversion.

In some embodiments, the PMIC 914 may control, or otherwise be part of, various power saving mechanisms of the UE 900 including DRX as discussed herein. A battery 918 may power the UE 900, although in some examples the UE 900 may be mounted or deployed in a fixed location, and may have a power supply coupled to an electrical grid. The battery 918 may be a lithium ion battery, a metal-air battery, such as a zinc-air battery, an aluminum-air battery, a lithium-air battery, and the like. In some implementations, such as in vehicle-based applications, the battery 918 may be a typical lead-acid automotive battery.

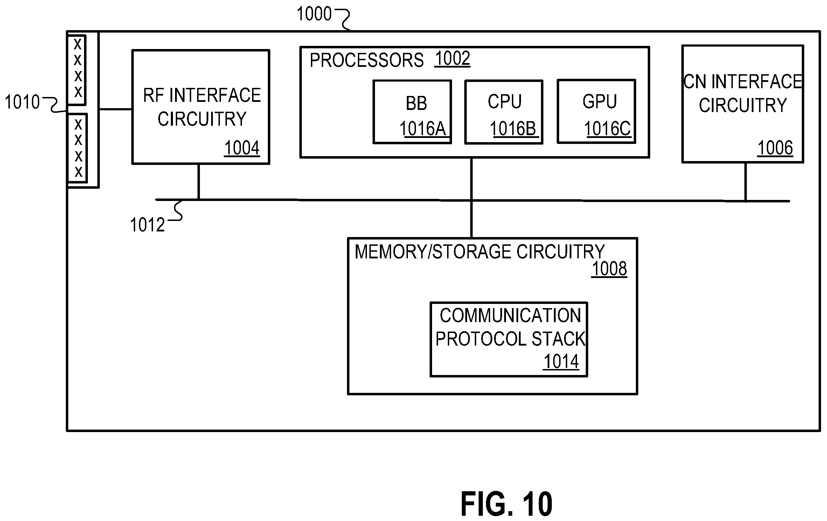

FIG. 10 illustrates an access node 1000 (e.g., a base station or gNB), in accordance with some embodiments. The access node 1000 may be similar to and substantially interchangeable with base station 204. The access node 1000 may include processors 1002, RF interface circuitry 1004, core network (CN) interface circuitry 1006, memory/storage circuitry 1008, and one or more antennas 1010.

The components of the access node 1000 may be coupled with various other components over one or more interconnects 1012. The processors 1002, RF interface circuitry 1004, memory/storage circuitry 1008 (including communication protocol stack 1014), one or more antennas 1010, and interconnects 1012 may be similar to like-named elements shown and described with respect to FIG. 9. For example, the processors 1002 may include processor circuitry such as, for example, baseband processor circuitry (BB) 1016A, central processor unit circuitry (CPU) 1016B, and graphics processor unit circuitry (GPU) 1016C.

In some embodiments, the processors 1002 are configured to generate signaling indicating to a UE the enhanced UL DMRS configuration to use. The access node 1000 may then communicate the signaling via RF interface circuitry 1004. In some embodiments, the energy per resource element (EPRE) ratio between PUSCH and DMRS in one symbol can be determined based on a number of CDM groups without data in the symbol. Such embodiments maintain a consistent transmission power across symbols. In a first option, the access node 1000 indicates via DCI a total number of CDM groups across symbols. In a second option, the access node 1000 indicates via DCI a total number of CDM groups per DMRS symbol.

In some embodiments, the processors 1002 are configured to generate signaling instructing a UE to use a network-specific mapping pattern or a UE-specific mapping pattern. The access node 1000 may then communicate the signaling via RF interface circuitry 1004. In some examples, the signaling can be higher layer signaling or downlink control information (DCI). In some examples, the higher layer signaling is one of Radio Resource Control (RRC) signaling or a Medium Access Control (MAC) Control Element (CE).

In some embodiments, the processors 1002 are configured to process a communication received from a UE. The communication includes a resource block that includes UL DMRS mapped to the single OFDM symbol. The UL DMRS may be mapped using a frequency division (FD) based mapping pattern for mapping UL DRMS to a single orthogonal frequency-division multiple access symbol (OFDM), where the DMRS are associated with eight antenna ports. Alternatively, the UL DMRS may be mapped using a time division multiplexing (TDM) based mapping pattern for mapping the UL DMRS to DMRS symbols, where the DMRS are categorized into a plurality of control division multiplexing (CDM) groups, and where the mapping pattern uses TDM to multiplex the plurality of CDM groups in the DMRS symbols.

The CN interface circuitry 1006 may provide connectivity to a core network, for example, a 5th Generation Core network (5GC) using a 5GC-compatible network interface protocol such as carrier Ethernet protocols, or some other suitable protocol. Network connectivity may be provided to/from the access node 1000 via a fiber optic or wireless backhaul. The CN interface circuitry 1006 may include one or more dedicated processors or FPGAs to communicate using one or more of the aforementioned protocols. In some implementations, the CN interface circuitry 1006 may include multiple controllers to provide connectivity to other networks using the same or different protocols.

As used herein, the terms "access node," "access point," or the like may describe equipment that provides the radio baseband functions for data and/or voice connectivity between a network and one or more users. These access nodes can be referred to as BS, gNBs, RAN nodes, eNBs, NodeBs, RSUs, TRxPs or TRPs, and so forth, and can comprise ground stations (e.g., terrestrial access points) or satellite stations providing coverage within a geographic area (e.g., a cell). As used herein, the term "NG RAN node" or the like may refer to an access node 1000 that operates in an NR or 5G system (for example, a gNB), and the term "E-UTRAN node" or the like may refer to an access node 1000 that operates in an LTE or 4G system (e.g., an eNB). According to various embodiments, the access node 1000 may be implemented as one or more of a dedicated physical device such as a macrocell base station, and/or a low power (LP) base station for providing femtocells, picocells or other like cells having smaller coverage areas, smaller user capacity, or higher bandwidth compared to macrocells.

In some embodiments, all or parts of the access node 1000 may be implemented as one or more software entities running on server computers as part of a virtual network, which may be referred to as a CRAN and/or a virtual baseband unit pool (vBBUP). In these embodiments, the CRAN or vBBUP may implement a RAN function split, such as a PDCP split wherein RRC and PDCP layers are operated by the CRAN/vBBUP and other L2 protocol entities are operated by the access node 1000; a MAC/PHY split wherein RRC, PDCP, RLC, and MAC layers are operated by the CRAN/vBBUP and the PHY layer is operated by the access node 1000; or a "lower PHY" split wherein RRC, PDCP, RLC, MAC layers and upper portions of the PHY layer are operated by the CRAN/vBBUP and lower portions of the PHY layer are operated by the access node 1000.

In V2X scenarios, the access node 1000 may be or act as RSUs. The term "Road Side Unit" or "RSU" may refer to any transportation infrastructure entity used for V2X communications. An RSU may be implemented in or by a suitable RAN node or a stationary (or relatively stationary) UE, where an RSU implemented in or by a UE may be referred to as a "UE-type RSU," an RSU implemented in or by an eNB may be referred to as an "eNB-type RSU," an RSU implemented in or by a gNB may be referred to as a "gNB-type RSU," and the like.

Various components may be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

For one or more embodiments, at least one of the components set forth in one or more of the preceding figures may be configured to perform one or more operations, techniques, processes, or methods as set forth herein. For example, the baseband circuitry as described above in connection with one or more of the preceding figures may be configured to operate in accordance with one or more of the examples set forth herein. For another example, circuitry associated with a UE, base station, network element, etc. as described above in connection with one or more of the preceding figures may be configured to operate in accordance with one or more of the examples set forth herein.

Example 5 is the method of Example 1, where the FD-based mapping pattern includes a length-2 FD-orthogonal cover code (FD-OCC2) and four control division multiplexing (CDM) groups.

Example 6 is the method of Example 1 or 5, where communicating, using the FD-based mapping pattern, a communication including a resource block that includes the UL DMRS mapped to the single OFDM symbol involves: generating the DMRS for resource elements in the OFDM symbol using: ${a}_{k , l}^{p , u} = {w}_{f} \left(k′\right) {w}_{l} \left(l′\right) r \left(2n+k′\right)$, where k represents a subcarrier index, l represents a symbol index, p represents an antenna port index, u represents a subcarrier spacing scaling factor, w_l represents a time division (TD) sequence, w_f represents a FD sequence, and r represents a base DMRS sequence.

Example 7 is the method of Example 6, where k = 4n + k' + delta, where delta is selected from a set {0, 2, 4, 6}, and where k' is selected from a set {0, 1}.

Example 8 is the method any preceding Example, where the communication includes a plurality of resource blocks that include DMRS, where a number of the plurality of resource blocks is even.

Example 9 is the method of any preceding Example, where determining a frequency division (FD) based mapping pattern for mapping uplink (UL) demodulation reference signals (DMRS) involves receiving signaling indicating whether to use a network-specific mapping pattern or a UE-specific mapping pattern.

Example 10 is the method of Example 9, where the signaling is one of higher layer signaling or a downlink control information (DCI).

Example 11 is the method of Examples 9 or 10, where the higher layer signaling is one of Radio Resource Control (RRC) signaling or a Medium Access Control (MAC) Control Element (CE).

Example 12 is the method of Example 9,10, or 11, the method further involving determining, based on the signaling, to use the network-specific mapping; and in response, determining the FD-based mapping pattern based on one of: (i) a reference point for a current active bandwidth part and an allocated resource block index, or (ii) a common reference point and the allocated resource block index.

Example 13 includes a method that involves determining a time division multiplexing (TDM) based mapping pattern for mapping uplink (UL) demodulation reference signals (DMRS) to DMRS symbols, where the DMRS are categorized into a plurality of control division multiplexing (CDM) groups, and where the mapping pattern uses TDM to multiplex the plurality of CDM groups in the DMRS symbols; and generating, using the TDM-based mapping pattern, a communication including a resource block that includes the UL DMRS mapped to the DMRS symbols.

Example 14 is the method of Example 13, where communicating, using the TDM-based mapping pattern, a communication including a resource block that includes the UL DMRS mapped to the DMRS symbols involves mapping each of the plurality of CDM groups to a respective DMRS symbol.

Example 15 is the method of Example 13 or 14, where the plurality of CDM groups include four CDM groups, and where the DMRS symbols include two DMRS symbols.

Example 16 is the method of Example 13, 14, or 15, where two of the four CDM groups are mapped to each DMRS symbol.

Example 17 is the method of Example 13, 14, 15, or 16, where the plurality of CDM groups include six CDM groups, and where the DMRS symbols include two DMRS symbols.

Example 18 is the method of Example 13, 14, 15, 16, or 17, where three of the six CDM groups are mapped to each DMRS symbol.

Example 19 may include one or more non-transitory computer-readable media comprising instructions to cause an electronic device, upon execution of the instructions by one or more processors of the electronic device, to perform one or more elements of a method described in or related to any of examples 1-18, or any other method or process described herein.

Example 20 may include an apparatus comprising logic, modules, or circuitry to perform one or more elements of a method described in or related to any of examples 1-18, or any other method or process described herein.

Example 21 may include a method, technique, or process as described in or related to any of examples 1-18, or portions or parts thereof.

Example 22 may include an apparatus comprising: one or more processors and one or more computer-readable media comprising instructions that, when executed by the one or more processors, cause the one or more processors to perform the method, techniques, or process as described in or related to any of examples 1-18, or portions thereof.

Example 23 may include a signal as described in or related to any of examples 1-18, or portions or parts thereof.

Example 24 may include a information element, packet, frame, segment, PDU, or message as described in or related to any of examples 1-18, or portions or parts thereof, or otherwise described in the present disclosure.

Example 25 may include a signal encoded with data as described in or related to any of examples 1-18, or portions or parts thereof, or otherwise described in the present disclosure.

Example 26 may include a signal encoded with an IE, packet, frame, segment, PDU, or message as described in or related to any of examples 1-18, or portions or parts thereof, or otherwise described in the present disclosure.

Example 27 may include an electromagnetic signal carrying computer-readable instructions, where execution of the computer-readable instructions by one or more processors is to cause the one or more processors to perform the method, techniques, or process as described in or related to any of examples 1-18, or portions thereof.

Example 28 may include a computer program comprising instructions, where execution of the program by a processing element is to cause the processing element to carry out the method, techniques, or process as described in or related to any of examples 1-18, or portions thereof.

Example 29 may include a method of communicating in a wireless network as shown and described herein.

Example 30 may include a system for providing wireless communication as shown and described herein.

Example 31 may include a device for providing wireless communication as shown and described herein.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

The invention is defined by the appended claims 1-10.

## Claims

1. An apparatus for a user equipment, UE, configured to be operable in a wireless communication system according to a 3GPP standard, the apparatus comprising one or more baseband processors configured to perform operations comprising:
Determining (822) a time division multiplexing, TDM, based mapping pattern for mapping uplink, UL, demodulation reference signals, DMRS, to two consecutive orthogonal frequency-division multiple access, OFDM, symbols (600), wherein the DMRS are categorized into four control division multiplexing, CDM, groups and are associated with eight antenna ports, and wherein the TDM-based mapping pattern uses: (i) TDM and (ii) a length-2 frequency division orthogonal cover code, FD-OCC2, to multiplex two of the four CDM groups in a first OFDM symbol of the two consecutive OFDM symbols and the remaining two of the four CDM groups in a second OFDM symbol of the two consecutive OFDM symbols (600); and
generating, using the TDM-based mapping pattern, a resource block that includes the UL DMRS mapped to the two consecutive OFDM symbols (600).

2. The apparatus of claim 1, wherein generating, using the TDM-based mapping pattern, a resource block that includes the UL DMRS mapped to the two consecutive OFDM symbols comprises:
mapping each of the four CDM groups to a respective OFDM symbol.

3. The apparatus of claim 1, wherein generating, using the TDM-based mapping pattern, a resource block that includes the UL DMRS mapped to the two consecutive OFDM symbols (600) comprises:
generating the UL DMRS using: ${a}_{k , l}^{p , u} = {w}_{f} \left(k′\right) r \left(2n+k′\right)$ wherein k represents a subcarrier index, l represents a symbol index, p represents an antenna port index, u represents a subcarrier spacing scaling factor, w_{f} represents a frequency division, FD, sequence, and r represents a base DMRS sequence.

4. The apparatus of claim 3, wherein k = 4n + k' + delta, wherein k' is selected from a set {0, 1, 2, 3}, delta is selected from a set {0,1}, l = l_0, l_0 + delta', l_0 is a starting symbol for DMRS and delta' is selected from a set {0,1}.

5. The apparatus of claim 6, wherein delta, delta', and w_{f} are selected using the table:
| **Port index** | **CDM group** | **Delta and delta'** | **W_{f}** |
|---|---|---|---|
| 0 | 0 | 0, 0 | [1, 1] |
| 1 | 0 | 0, 0 | [1, -1] |
| 2 | 1 | 1, 0 | [1, 1] |
| 3 | 1 | 1, 0 | [1, -1] |
| 4 | 2 | 0, 1 | [1, 1] |
| 5 | 2 | 0, 1 | [1, -1] |
| 6 | 3 | 1, 1 | [1, 1] |
| 7 | 3 | 1, 1 | [1, -1] |

6. An apparatus for a user equipment, UE, configured to be operable in a wireless communication system according to a 3GPP standard, the apparatus comprising one or more baseband processors configured to perform operations comprising:
determining (822) a time division multiplexing, TDM, based mapping pattern for mapping uplink, UL, demodulation reference signals, DMRS, to two consecutive orthogonal frequency-division multiple access, OFDM symbols (610) wherein the DMRS are categorized into six control division multiplexing, CDM, groups and are associated with twelve antenna ports, and wherein the TDM-based mapping pattern uses: (i) TDM and (ii) a length-2 frequency division orthogonal cover code, FD-OCC2, to multiplex three of the six CDM groups in a first OFDM symbol of the two consecutive OFDM symbols and the remaining three of the six CDM groups in a second OFDM symbol of the two consecutive OFDM symbols (610); and
generating, using the TDM-based mapping pattern, a resource block that includes the UL DMRS mapped to the two OFDM symbols (610).

7. The apparatus of clause 6, wherein generating, using the TDM-based mapping pattern, a resource block that includes the UL DMRS mapped to the two consecutive OFDM symbols comprises:
mapping each of the six CDM groups to a respective OFDM symbol.

8. The apparatus of clause 6, wherein generating, using the TDM-based mapping pattern, a resource block that includes the UL DMRS mapped to the two consecutive OFDM symbols (302a, 302b) comprises:
generating the UL DMRS using: ${a}_{k , l}^{p , u} = {w}_{f} \left(k′\right) r \left(2n+k′\right)$

9. The apparatus of clause 8, wherein k = 6n + k' + delta, wherein k' is selected from a set {0, 1, 2, 3}, delta is selected from a set {0,2,4}, l = l_0, l_0 + delta', l_0 is a starting symbol for DMRS, and delta' is selected from a set {0,1,2}.

10. The apparatus of clause 9, wherein delta, delta', and w_{f} are selected using the table:
| **Port index** | **CDM group** | **Delta and delta'** | **W_{f}** |
|---|---|---|---|
| 0 | 0 | 0, 0 | [1, 1] |
| 1 | 0 | 0, 0 | [1, -1] |
| 2 | 1 | 2, 0 | [1, 1] |
| 3 | 1 | 2, 0 | [1, -1] |
| 4 | 2 | 4, 0 | [1, 1] |
| 5 | 2 | 4, 0 | [1, -1] |
| 6 | 3 | 0, 1 | [1, 1] |
| 7 | 3 | 0, 1 | [1, -1] |
| 8 | 4 | 0, 2 | [1, 1] |
| 9 | 4 | 0, 2 | [1, -1] |
| 10 | 5 | 0, 4 | [1, 1] |
| 11 | 5 | 0, 4 | [1, -1] |

## Patentansprüche

1. Vorrichtung für eine Benutzereinrichtung, UE, die konfiguriert ist, um in einem Drahtloskommunikationssystem gemäß einem 3GPP-Standard betreibbar zu sein, die Vorrichtung umfassend einen oder mehrere Basisbandprozessoren, die konfiguriert sind, um Betriebe durchzuführen, umfassend:
Bestimmen (822) eines auf Zeitmultiplexverfahren, TDM, basierenden Abbildungsmusters zum Abbilden von Uplink-Demodulationsreferenzsignalen, UL-Demodulationsreferenzsignalen, DMRS, auf zwei aufeinanderfolgende orthogonale Frequenzmultiplexzugriffssymbole, OFDM-Symbole (600), wobei die DMRS in vier Steuermultiplexverfahrensgruppen, CDM-Gruppen, kategorisiert sind und acht Antennenanschlüssen zugeordnet sind, und wobei das auf TDM basierende Abbildungsmuster verwendet: (i) TDM und (ii) einen orthogonalen Frequenzmultiplex-Cover-Code der Länge 2, FD-OCC2, um zwei der vier CDM-Gruppen in einem ersten OFDM-Symbol der zwei aufeinanderfolgenden OFDM-Symbole und die verbleibenden zwei der vier CDM-Gruppen in einem zweiten OFDM-Symbol der zwei aufeinanderfolgenden OFDM-Symbole (600) zu multiplexen; und
Erzeugen, unter Verwendung des auf TDM basierenden Abbildungsmusters, eines Ressourcenblocks, der das auf die zwei aufeinanderfolgenden OFDM-Symbole (600) abgebildete UL-DMRS einschließt.

2. Vorrichtung nach Anspruch 1, wobei das Erzeugen, unter Verwendung des auf TDM basierenden Abbildungsmusters, eines Ressourcenblocks, der das auf die zwei aufeinanderfolgenden OFDM-Symbole abgebildete UL-DMRS einschließt, das Abbilden jeder der vier CDM-Gruppen auf ein jeweiliges OFDM-Symbol umfasst.

3. Vorrichtung nach Anspruch 1, wobei das Erzeugen, unter Verwendung des auf TDM basierenden Abbildungsmusters, eines Ressourcenblocks, der das auf die zwei aufeinanderfolgenden OFDM-Symbole (600) abgebildete UL-DMRS einschließt, umfasst:
Erzeugen des UL DMRS unter Verwendung von: ${a}_{k , l}^{p , u} = {w}_{f} \left(k′\right) r \left(2n+k′\right)$
wobei k einen Hilfsträgerindex darstellt, l einen Symbolindex darstellt, p einen Antennenanschlussindex darstellt, u einen Hilfsträgerabstandsskalierungsfaktor darstellt, w_{f} eine Frequenzmultiplexsequenz, FD-Sequenz, darstellt und r eine Basis-DMRS-Sequenz darstellt.

4. Vorrichtung nach Anspruch 3, wobei k = 4n + k' + delta, wobei k' aus einer Menge {0, 1, 2, 3} ausgewählt ist, delta aus einer Menge {0,1}, l = l_0, l_0 + delta' ausgewählt ist, l_0 ein Startsymbol für DMRS ist und delta' aus einer Menge {0,1} ausgewählt ist.

5. Vorrichtung nach Anspruch 6, wobei delta, delta' und w_{f} unter Verwendung der Tabelle ausgewählt werden:
| **Anschlussindex** | **CDM-Gruppe** | **Delta und delta'** | **W_{f}** |
|---|---|---|---|
| 0 | 0 | 0, 0 | [1, 1] |
| 1 | 0 | 0, 0 | [1, -1] |
| 2 | 1 | 1, 0 | [1, 1] |
| 3 | 1 | 1, 0 | [1, -1] |
| 4 | 2 | 0, 1 | [1, 1] |
| 5 | 2 | 0, 1 | [1, -1] |
| 6 | 3 | 1, 1 | [1, 1] |
| 7 | 3 | 1, 1 | [1, -1] |

6. Vorrichtung für eine Benutzereinrichtung, UE, die konfiguriert ist, um in einem Drahtloskommunikationssystem gemäß einem 3GPP-Standard betreibbar zu sein, die Vorrichtung umfassend einen oder mehrere Basisbandprozessoren, die konfiguriert sind, um Betriebe durchzuführen, umfassend:
Bestimmen (822) eines auf Zeitmultiplexverfahren, TDM, basierenden Abbildungsmusters zum Abbilden von Uplink-Demodulationsreferenzsignalen, UL-Demodulationsreferenzsignalen, DMRS, auf zwei aufeinanderfolgende orthogonale Frequenzmultiplexzugriffssymbole, OFDM-Symbole (610), wobei die DMRS in sechs Steuermultiplexverfahrensgruppen, CDM-Gruppen, kategorisiert sind und zwölf Antennenanschlüssen zugeordnet sind, und wobei das auf TDM basierende Abbildungsmuster verwendet: (i) TDM und (ii) einen orthogonalen Frequenzmultiplex-Cover-Code der Länge 2, FD-OCC2, um drei der sechs CDM-Gruppen in einem ersten OFDM-Symbol der zwei aufeinanderfolgenden OFDM-Symbole und die verbleibenden drei der sechs CDM-Gruppen in einem zweiten OFDM-Symbol der zwei aufeinanderfolgenden OFDM-Symbole (610) zu multiplexen; und
Erzeugen, unter Verwendung des auf TDM basierenden Abbildungsmusters, eines Ressourcenblocks, der das auf die zwei OFDM-Symbole (610) abgebildete UL-DMRS einschließt.

7. Vorrichtung nach Klausel 6, wobei das Erzeugen, unter Verwendung des auf TDM basierenden Abbildungsmusters, eines Ressourcenblocks, der das auf die zwei aufeinanderfolgenden OFDM-Symbole abgebildete UL-DMRS einschließt, das Abbilden jeder der sechs CDM-Gruppen auf ein jeweiliges OFDM-Symbol umfasst.

8. Vorrichtung nach Klausel 6, wobei das Erzeugen, unter Verwendung des auf TDM basierenden Abbildungsmusters, eines Ressourcenblocks, der das auf die zwei aufeinanderfolgenden OFDM-Symbole (302a, 302b) abgebildete UL-DMRS einschließt, umfasst:
Erzeugen des UL DMRS unter Verwendung von: ${a}_{k , l}^{p , u} = {w}_{f} \left(k′\right) r \left(2n+k′\right)$

9. Vorrichtung nach Klausel 8, wobei k = 6n + k' + delta, wobei k' aus einer Menge {0, 1, 2, 3} ausgewählt ist, delta aus einer Menge {0,2,4} ausgewählt ist, l = l_0, l_0 + delta', l_0 ein Startsymbol für DMRS ist und delta' aus einer Menge {0,1,2} ausgewählt ist.

10. Vorrichtung nach Klausel 9, wobei delta, delta' und w_{f} unter Verwendung der Tabelle ausgewählt werden:
| **Anschlussindex** | **CDM-Gruppe** | **Delta und delta'** | **W_{f}** |
|---|---|---|---|
| 0 | 0 | 0, 0 | [1, 1] |
| 1 | 0 | 0, 0 | [1, -1] |
| 2 | 1 | 2, 0 | [1, 1] |
| 3 | 1 | 2, 0 | [1, -1] |
| 4 | 2 | 4, 0 | [1, 1] |
| 5 | 2 | 4, 0 | [1, -1] |
| 6 | 3 | 0, 1 | [1, 1] |
| 7 | 3 | 0, 1 | [1, -1] |
| 8 | 4 | 0, 2 | [1, 1] |
| 9 | 4 | 0, 2 | [1, -1] |
| 10 | 5 | 0, 4 | [1, 1] |
| 11 | 5 | 0, 4 | [1, -1] |

## Revendications

1. Appareil pour un équipement utilisateur, UE, configuré pour fonctionner dans un système de communication sans fil selon une norme 3GPP, l'appareil comprenant un ou plusieurs processeurs de bande de base configurés pour effectuer des opérations comprenant :
la détermination (822) d'un motif de mappage basé sur le multiplexage par répartition dans le temps, TDM, pour mapper des signaux de référence de démodulation, DMRS, de liaison montante, UL, sur deux symboles d'accès multiple par répartition orthogonale de la fréquence, OFDM, consécutifs (600), dans lequel les DMRS sont catégorisés en quatre groupes de multiplexage par répartition en commande, CDM, et sont associés à huit ports d'antenne, et dans lequel le motif de mappage basé sur le TDM utilise : (i) le TDM et (ii) un code de couverture orthogonal par répartition en fréquence de longueur 2, FD-OCC2, pour multiplexer deux des quatre groupes CDM dans un premier symbole OFDM des deux symboles OFDM consécutifs et les deux groupes restants des quatre groupes CDM dans un second symbole OFDM des deux symboles OFDM consécutifs (600) ; et
la génération, à l'aide du motif de mappage basé sur le TDM, d'un bloc de ressources qui comporte les DMRS UL mappés sur les deux symboles OFDM consécutifs (600).

2. Appareil selon la revendication 1, dans lequel la génération, à l'aide du motif de mappage basé sur le TDM, d'un bloc de ressources qui comporte les DMRS UL mappés sur les deux symboles OFDM consécutifs comprend le mappage de chacun des quatre groupes CDM sur un symbole OFDM respectif.

3. Appareil selon la revendication 1, dans lequel la génération, à l'aide du motif de mappage basé sur le TDM, d'un bloc de ressources qui comporte les DMRS UL mappés sur les deux symboles OFDM consécutifs (600) comprend :
la génération des DMRS UL à l'aide de : ${a}_{k , l}^{p , u} = {w}_{f} \left(k′\right) r \left(2n+k′\right)$
où k représente un indice de sous-porteuse, l représente un indice de symbole, p représente un indice de port d'antenne, u représente un facteur d'échelle d'espacement de sous-porteuses, w_{f} représente une séquence par répartition en fréquence, FD, et r représente une séquence DMRS de base.

4. Appareil selon la revendication 3, dans lequel k = 4n + k' + delta, où k' est sélectionné dans un ensemble {0, 1, 2, 3}, delta est sélectionné dans un ensemble {0,1}, l = l_0, l_0 + delta', l_0 est un symbole de départ pour les DMRS, et delta' est sélectionné dans un ensemble {0,1}.

5. Appareil selon la revendication 6, dans lequel delta, delta', et w_{f} sont sélectionnés à l'aide du tableau :
| **Indice de port** | **Groupe CDM** | **Delta et delta'** | **W_{f}** |
|---|---|---|---|
| 0 | 0 | 0, 0 | [1, 1] |
| 1 | 0 | 0, 0 | [1, -1] |
| 2 | 1 | 1, 0 | [1, 1] |
| 3 | 1 | 1, 0 | [1, -1] |
| 4 | 2 | 0, 1 | [1, 1] |
| 5 | 2 | 0, 1 | [1, -1] |
| 6 | 3 | 1, 1 | [1, 1] |
| 7 | 3 | 1, 1 | [1, -1] |

6. Appareil pour un équipement utilisateur, UE, configuré pour fonctionner dans un système de communication sans fil selon une norme 3GPP, l'appareil comprenant un ou plusieurs processeurs de bande de base configurés pour effectuer des opérations comprenant :
la détermination (822) d'un motif de mappage basé sur le multiplexage par répartition dans le temps, TDM, pour mapper des signaux de référence de démodulation, DMRS, de liaison montante, UL, sur deux symboles d'accès multiple par répartition orthogonale de la fréquence, OFDM, consécutifs (610), dans lequel les DMRS sont catégorisés en six groupes de multiplexage par répartition en commande, CDM, et sont associés à douze ports d'antenne, et dans lequel le motif de mappage basé sur le TDM utilise : (i) le TDM et (ii) un code de couverture orthogonal par répartition en fréquence de longueur 2, FD-OCC2, pour multiplexer trois des six groupes CDM dans un premier symbole OFDM des deux symboles OFDM consécutifs et les trois groupes restants des six groupes CDM dans un second symbole OFDM des deux symboles OFDM consécutifs (610) ; et
la génération, à l'aide du motif de mappage basé sur le TDM, d'un bloc de ressources qui comporte les DMRS UL mappés sur les deux symboles OFDM (610).

7. Appareil selon la revendication 6, dans lequel la génération, à l'aide du motif de mappage basé sur le TDM, d'un bloc de ressources qui comporte les DMRS UL mappés sur les deux symboles OFDM consécutifs comprend le mappage de chacun des six groupes CDM sur un symbole OFDM respectif.

8. Appareil selon la revendication 6, dans lequel la génération, à l'aide du motif de mappage basé sur le TDM, d'un bloc de ressources qui comporte les DMRS UL mappés sur les deux symboles OFDM consécutifs (302a, 302b) comprend :
la génération des DMRS UL à l'aide de : ${a}_{k , l}^{p , u} = {w}_{f} \left(k′\right) r \left(2n+k′\right)$

9. Appareil selon la revendication 8, dans lequel k = 6n + k' + delta, où k' est sélectionné dans un ensemble {0, 1, 2, 3}, delta est sélectionné dans un ensemble {0,2,4}, l = l_0, l_0 + delta', l_0 est un symbole de départ pour les DMRS, et delta' est sélectionné dans un ensemble {0,1,2}.

10. Appareil selon la revendication 9, dans lequel delta, delta' et w_{f} sont sélectionnés à l'aide du tableau :
| **Indice de port** | **Groupe CDM** | **Delta et delta'** | **W_{f}** |
|---|---|---|---|
| 0 | 0 | 0, 0 | [1, 1] |
| 1 | 0 | 0, 0 | [1, -1] |
| 2 | 1 | 2, 0 | [1, 1] |
| 3 | 1 | 2, 0 | [1, -1] |
| 4 | 2 | 4, 0 | [1, 1] |
| 5 | 2 | 4, 0 | [1, -1] |
| 6 | 3 | 0, 1 | [1, 1] |
| 7 | 3 | 0, 1 | [1, -1] |
| 8 | 4 | 0, 2 | [1, 1] |
| 9 | 4 | 0, 2 | [1, -1] |
| 10 | 5 | 0, 4 | [1, 1] |
| 11 | 5 | 0, 4 | [1, -1] |
